# NEUE EUROPÄISCHE PATENTSCHRIFT

(11) **EP 3 131 833 B2**
(45) Veröffentlichungstag und Bekanntmachung des Hinweises auf die Entscheidung über den Einspruch: **11.06.2025**
(45) Hinweis auf die Patenterteilung: 27.06.2018
(21) Anmeldenummer: 15717861.7
(22) Anmeldetag: 16.04.2015
(51) Int. Cl.: B65D 85/804

(54) **PORTIONSKAPSEL UND VERFAHREN ZUR HERSTELLUNG EINES GETRÄNKS MIT EINER PORTIONSKAPSEL**
PORTION CAPSULE FOR THE PRAPARATION OF A BEVERAGE AND PROCESS TO PRODUCE SUCH A BEVERAGE BY USING SAID CAPSULE
CAPSULE POUR LA PRÉPARATION DE BOISSONS ET PROCÉDÉ DE PRÉPARATION DE BOISSONS L'UTILISANT

(30) Priorität: 17.04.2014 DE 102014105486
(43) Veröffentlichungstag der Anmeldung: 22.02.2017
(73) Patentinhaber: K-fee System GmbH, 51469 Bergisch Gladbach (DE)
(72) Erfinder: EMPL, Günter, 51429 Bergisch Gladbach (DE); KRÜGER, Marc, 51467 Bergisch-Gladbach (DE)
(74) Vertreter: Wolff, Felix
(86) Internationale Anmeldenummer: PCT/EP2015/058289
(87) Internationale Veröffentlichungsnummer: WO 2015/158838

(56) Entgegenhaltungen:
- EP-A1- 1 221 418
- EP-A1- 1 344 724
- WO-A1-2010/112353
- WO-A1-2012/038063
- WO-A1-2013/053757
- WO-A1-2013/189923
- WO-A1-2014/001563
- WO-A1-2014/001564
- WO-A1-2014/049143
- US-A1- 2012 070 543

## Beschreibung

Die vorliegende Erfindung betrifft eine Portionskapsel zur Herstellung eines Getränks, aufweisend einen Kapselkörper mit einem Kapselboden und einer Einfüllseite, wobei zwischen dem Kapselboden und der Einfüllseite ein Hohlraum zur Aufnahme eines pulverförmigen oder flüssigen Getränkesubstrats ausgebildet ist und wobei zwischen dem Getränkesubstrat und dem Kapselboden ein Filterelement angeordnet ist.

Solche Portionskapseln sind aus dem Stand der Technik allgemein bekannt. Beispielsweise sind in den Druckschiften WO 2013/053757 A1, EP 1792850 B1, EP 1344722 A1 und US 2003/0172813 A1 gattungsgemäße Portionskapseln zur Kaffee- und Espressozubereitung offenbart.

Derartige Portionskapseln zur Herstellung eines Getränkes sind bevorzugt kegelstumpfförmig oder zylindrisch geformt und werden beispielsweise aus einer tiefgezogenen Kunststofffolie oder im Kunststoffspritzverfahren hergestellt. Sie haben üblicherweise eine offene Einfüllseite mit einem Kragenrand, auf den eine Deckelfolie gesiegelt oder aufgeklebt wird, einen geschlossenen Kapselboden, wobei zwischen dem Getränkesubstrat und dem Kapselboden ein sich gegen den Kapselboden abstützendes Partikelsieb angeordnet ist. Diese Siebe sind entweder aus einem thermoplastischen Kunststoff gespritzt oder aus einer Kunstofffolie tiefgezogen oder geprägt.

Für die Zubereitung eines Kaffeegetränkes wird die Portionskapsel in eine Brühkammer eines Zubereitungsgerätes eingebracht. Nach oder während des Schließvorganges der Brühkammer wird die Kapsel bevorzugt auf ihrer geschlossenen Bodenseite mittels eines in der Brühkammer angeordneten Öffnungsdornes geöffnet und nach dem Abdichten der Brühkammer wird die mit einer Verschlussfolie verschlossene Einfüllseite der Portionskapsel mittels Einstechmitteln angestochen. Anschließend wird Zubereitungsflüssigkeit, vorzugsweise heißes Wasser, unter Druck in die Portionskapsel gefördert. Die Zubereitungsflüssigkeit durchströmt das Getränkesubstrat und extrahiert und/oder löst die für die Getränkeherstellung benötigten Stoffe aus dem Getränkesubstrat aus. Für die Zubereitung eines Espresso wirkt zum Extrahieren der ätherischen Öle beispielsweise ein Brühwasserdruck von bis zu 20 bar auf das Kaffepulver. Dieser Druck wirkt ferner auch auf das zwischen dem Kaffeepulver und dem Kapselboden und vor dem eingestochenen Kapselauslauf liegende Partikelsieb ein.

Nachteilig an den im Kunststoffspritzverfahren oder im Tiefzieh- oder Prägeverfahren hergestellten Sieben ist jedoch, dass für die Rückhaltung der Kaffeepartikel die Öffnung der Sieblöcher kleiner als die kleinsten Kaffeepartikel sein müssen. Da im Kaffeemahlverfahren zwangsläufig auch ein gewisser Staubanteil anfällt, ergibt sich bei zu großen Sieblöchern ein Kaffeepartikeldurchgang oder bei zu kleinen Sieblöchern, insbesondere bei hohen Drücken, ein Verstopfen der Siebe. Ferner sind unter den Sieben entsprechende, gegen den Kapselboden wirkende Abstützelemente erforderlich, um die Brühwasserdrücke von bis zu 20 bar aufzunehmen und eine Verformung der Siebe in Folge des hohen Brühwasserdrucks (zusammen mit einer hohen Brühwassertemperatur) zu verhindern. In nachteiliger Weise, erfordern diese Abstützelement insbesondere bei im Spritzgussverfahren hergestellten Siebanordnungen einen zusätzlichen Materialeinsatz, wodurch die Herstellungskosten steigen.

Im Stand der Technik sind deshalb Portionskapseln mit Siebanordnungen bekannt, die diese Nachteile vermeiden sollen. In der US 2778739, der EP 1710173 A1 und der US 5352765 sind Portionskapseln mit Siebanordnungen offenbart, die aus einem Siebträger mit relativ großen Durchgangsöffnungen bestehen, wobei diese Öffnungen mit einem Filtermaterial abgedeckt sind. Nachteil dieser Anordnungen ist, dass zur Darstellung derartiger Siebanordnungen Zusatzkosten für Material und die Fertigung entstehen, da sie aus einem stabilen Siebträger und dem auf dem Siebträger angeordneten Filtermaterial bestehen.

Sowohl bei Sieben mit Sieblöchern als auch bei Siebanordnungen mit einem zusätzlichen Filtermaterial muss sichergestellt werden, dass das durch die Siebanordnung tretende fertige Getränk zu einer Kapselausflussöffnung fließen kann, d.h. zwischen dem Kapselboden und der Siebanordnung muss ein Freiraum für den Getränkeablauf vorgesehen werden. Außerdem beanspruchen derartige Siebanordnungen einen eigenen Raumanteil in der Portionskapsel, was zu einer Vergrößerung des Kapselvolumens und damit zwangsläufig ebenfalls zu einem zusätzlichen Materialeinsatz führt.

Aus dem Stand der Technik, beispielsweise der WO2012/010317 sind außerdem ein Filter bekannt, die aus einem nicht gewebten Fasermaterial bekannt. Dieser Filter ist jedoch nicht für alle Kaffeeautomaten einsetzbar.

Es war deshalb die Aufgabe der vorliegenden Erfindung, eine Portionskapsel mit einer Filteranordnung zur Verfügung zu stellen, welche im Vergleich zum Stand der Technik kostengünstiger zu fertigen ist und bei welcher gleichzeitig die im Zusammenhang mit dem Stand der Technik aufgezeigten Nachteile vermieden werden.

Gelöst wird diese Aufgabe mit einer Portionskapsel gemäß Patentanspruch 1.

Im Vergleich zum Stand der Technik hat die erfindungsgemäße Portionskapsel den Vorteil, dass ein einfaches und kostengünstiges Filtervlies oder Filz als Filtersieb Verwendung findet. Ein aufwändiger Kunststoffspritzvorgang oder ein Tiefzieh- bzw. Prägeverfahren zur Herstellung der Siebe ist somit einsparbar. Die Herstellungskosten werden somit erheblich gesenkt. Zudem wird keine Stützstruktur benötigt, da sich das Vlies unmittelbar am Kapselboden abstützt. Im Vergleich zu den aus dem Stand der Technik bekannten Kunststofffiltern hat ein Filtervlies zudem den Vorteil, dass es eine deutlich größere Flüssigkeitseintrittsoberfläche aufweist. Ferner wird ein Flüssigkeitsquerfluss (parallel zur Haupterstreckungsebene der Filterebene) ermöglicht, wodurch ein besseres Durchmisch- und Abfließverhalten erzielt wird. Darüber hinaus hat sich gezeigt, dass sich bei der Verwendung eines Filtervlieses die Gefahr von Siebverstopfungen deutlich reduziert bzw. nahezu ausgeräumt ist. Überraschenderweise zeigt sich das Filtervlies sowohl bei einer Getränkezubereitung mit einer unter vergleichsweise niedrigen Druck stehenden Zubereitungsflüssigkeit, als auch bei einer Getränkezubereitung mit einer unter vergleichsweise hohen Druck stehenden Zubereitungsflüssigkeit als verstopfungsresistent. Ferner wird zuverlässig stets einen Flüssigkeitsquerfluss im Filtervlies aufrechterhalten und ein Abfluss der in das Filtervlies eintretenden Flüssigkeiten zu einer Abflussöffnung gewährleistet. Trotzdem bildet sich eine sogenannte "Crema", d.h. Schaum, auf dem Getränk, insbesondere dem Espresso, aus. Durch die Zweilagigkeit des Filterelements, kann eine Lage von einem Perforationselement durchstochen werden, ohne das nennenswerte Mengen an Granulat in das herzustellende Getränk gelangen.

Die beiden Lagen sind vorzugsweise zunächst getrennt und werden bei dem Herstellungsprozess der Portionskapsel miteinander verbunden, insbesondere wenn sie mit dem Boden der Portionskapsel verbunden werden.

Die Portionskapsel im Sinne der vorliegenden Erfindung umfasst eine vorzugsweise hermetisch dichte Portionskapsel. Dies bedeutet, dass das in der Portionskapsel befindliche Getränke- oder Lebensmittelpulver, beispielsweise Kaffeepulver, Suppenpulver oder Tee, vor dem Extraktionsvorgang im Wesentlichen aromadicht gegenüber der Umwelt verschlossen ist. Die Portionskapsel muss aber nicht hermetisch dicht sein, sondern kann auch, vor deren Verwendung in einer hermetisch dichten Verpackung vorgesehen sein, die dann, beispielsweise manuell geöffnet wird.

Ein Vlies im Sinne der Erfindung ist eine ungeordnete, nicht gewebte Struktur aus Fasern, insbesondere Kunststofffasern. Ein Vlies im Sinne der Erfindung kann aus Kunststoff und/oder Naturfasern gefertigt sein. Ein Vlies kann beispielsweise aus Papier oder Papierähnliche Stoffen bestehen.

Vorzugsweise sind beide Lagen aus einem Vliesmaterial hergestellt. Vorzugsweise sind beide Vlieslagen in Bezug auf Material, Dicke und/oder Durchmesser identisch. Die beiden Lagen sind vorzugsweise miteinander verbunden, insbesondere durch Schweißen, vorzugsweise Ultraschallschweißen miteinander verbunden. Vorzugsweise erfolgt der Verbund entlang eines Kreisrings, der sich besonders bevorzugt im oder in der Nähe des Randbereichs des Filters befindet.

Gemäß einer bevorzugten Ausführungsform der vorliegenden Erfindung ist vorgesehen, dass das Vlies einen aus Kunststoff-Feinfasern, beispielsweise Polyester-Feinfasern, hergestellten Vliesstoff umfasst, welcher insbesondere ein Wirrfaser- und/oder faserorientierter-Vliesstoff ist. Das Vlies umfasst bevorzugt eine Massenbelegung (auch als Grammatur oder Flächengewicht bezeichnet) zwischen 40 und 250 Gramm pro Quadratmeter, besonders bevorzugt zwischen 80 und 120 Gramm pro Quadratmeter, und ganz besonders bevorzugt, von im Wesentlichen 100 Gramm pro Quadratmeter. Eine Lage des Filterelements weist bevorzugt eine Dicke zwischen 0,2 und 2,0 Millimetern, besonders bevorzugt zwischen 0,25 und 0,39 Millimetern, und ganz besonders bevorzugt, von im Wesentlichen 0,32 Millimetern auf. Das Vlies ist derart ausgebildet, dass die Luftdurchlässigkeit des Vlieses bei 100 Pascal bevorzugt zwischen 1000 und 3000 l/(m²s), besonders bevorzugt zwischen 1500 und 2500 (l/m²s) und ganz besonders bevorzugt, im Wesentlichen bei 2000 l/(m²s) liegt. Es hat sich in überraschender und nicht vorhersehbarer Weise gezeigt, dass mit derartigen Vliesstoffen optimale Ergebnisse hinsichtlich Extraktionseffizienz, Durchmisch- und Abfließverhalten, sowie Verstopfungsresistenz zu erzielen sind und sich trotzdem die "Crema" bildet. Trotzdem wird das Getränkesubstrat gut zurückgehalten auch wenn der Aufstechdorn das Filterelement an- und/oder durchsticht.

Vorzugsweise wird das Vlies so auf dem Boden der Kapsel angeordnet dass es möglichst großflächig anliegt. Das Vlies an den Boden gesiegelt, insbesondere durch Ultraschall. Weiterhin bevorzugt wird das Vlies vor dessen Befestigung an der Kapsel, insbesondere dem Kapselboden, gespannt, um die Anlage an den Boden zu verbessern.

Vorzugsweise überdeckt das Filterelement den Kapselboden vollständig oder nur teilweise.

Beim Öffnen der Kapsel durch ein Perforationsmittel ist es vorteilhaft, wenn dieses das Vlies von dem Kapselboden wegbewegt und dabei spannt oder zusätzlich spannt. Dabei kann das Perforationsmittel in mindestens eine Lage des Vlieses eindringen und/oder mindestens eine Lage des Vlieses durchdringen.

Gemäß einer weiteren Ausführungsform der vorliegenden Erfindung weist das Filterelement eine Lage Vlies und eine Lage mit einer Filzstruktur auf. Insbesondere handelt es sich dabei um eine Nadelfilzstruktur. Vorzugsweise besteht die Filzlage aus mindestens einer Filzstruktur und einer Trägerstruktur, insbesondere einer Gewebestruktur, wobei, besonders bevorzugt die Filzstruktur, zumindest einen Teilabschnitt des Volumens, die Trägerstruktur umfasst. Vorzugsweise erstreckt sich die Filzstruktur über der gesamten Querschnitt der Trägerstruktur. Vorzugsweise ist die Filzstruktur form- kraft und/oder stoffschlüssig mit der Trägerstruktur verbunden.

Vorzugsweise wird die Oberfläche der Filzstruktur oder des Vlies behandelt, beispielsweise wärmebehandelt, um beispielsweise lose Fasern zu fixieren.

Vorzugsweise wird die Lage, die die Filzstruktur aufweist mit der Vlieslage, insbesondere durch Stoffschluss, verbunden.

Ein eine Trägerstruktur, insbesondere eine Gewebestruktur, und eine Filzstruktur aufweisendes Filterelement wird beispielsweise dadurch hergestellt, dass eine Gewebestruktur bestehend aus Längs- und Querfäden zur Verfügung gestellt wird. Für die Konstruktion eines Filzes, insbesondere eines Nadelfilzes, werden vorzugsweise Fasereinheiten ausgewählt von 0.8 - 7 dtex. Die Verbindung der Einzelfasern miteinander zu einem Filz und/oder dessen Verankerung in der Trägerstruktur findet vorzugsweise durch den Produktionsprozess des Vernadelns statt. Dabei werden Nadeln mit umgekehrten Widerhaken in das vorgelegte Faserpaket mit hoher Geschwindigkeit eingestochen und wieder herausgezogen. Durch die Widerhaken werden die Fasern über eine Vielzahl entstehender Schlaufen miteinander und/oder mit dem Trägergewebe verschlungen.

Die Trägerstruktur aufweisend eine oder mehrere Filzstrukturen umfasst bevorzugt eine Massenbelegung (auch als Grammatur oder Flächengewicht bezeichnet) zwischen 100 und 1500 Gramm pro Quadratmeter, besonders bevorzugt zwischen 200 und 650 Gramm pro Quadratmeter, und ganz besonders bevorzugt, von im Wesentlichen 150 - 250 Gramm pro Quadratmeter insbesondere für die Herstellung von Tee aber auch für Kaffee, Espresso und dergleichen und 600 - 700 Gramm pro Quadratmeter für die Herstellung von Kaffee, Espresso oder dergleichen aber auch für Tee. Ganz besonders bevorzugt beträgt die Grammatur 1000 - 1300 Gramm pro Quadratmeter für die Herstellung von Kaffee, Espresso oder dergleichen aber auch für Tee. Die Lage mit der Filzstruktur weist bevorzugt eine Dicke zwischen 0,4 und 5,0 Millimetern, besonders bevorzugt zwischen 1,1 und 3,0 Millimetern, und ganz besonders bevorzugt, 1,2 - 1,4 Millimeter für die Herstellung von Tee und 2,6 - 3,0 für die Herstellung von Kaffee auf.

Das Filterelement wird vorzugsweise in den Kapselkörper eingelegt und wird anschließend mit diesem und/oder der Seitenwand der Kapsel, insbesondere durch Schweißen, beispielsweise mit Ultraschall, verbunden, bevor das Getränkesubstrat in den Kapselkörper eingefüllt wird.

Der Kapselkörper ist bevorzugt kegelstumpfförmig oder zylindrisch geformt und wird beispielsweise aus Kunststoff, einem Naturstoff und/oder einem biologisch abbaubaren Werkstoff aus einer tiefgezogenen Kunststofffolie oder im Kunststoffspritzverfahren hergestellt. Der Kapselkörper weist vorzugsweise auf der Einfüllseite einen Kragenrand auf, auf den eine Deckelfolie gesiegelt oder aufgeklebt ist. Alternativ ist denkbar, dass der Kapselkörper und ein Kapseldeckel mittels eines mechanischen Verfahrens miteinander verbunden sind. Der Boden der Portionskapsel ist vorzugsweise geschlossen und wird vorzugsweise erst in der Brühkammer mittels eines von außen auf den Portionskapselboden wirkenden Perforationsmittels zur Erzeugung einer Auslauföffnung perforiert. Alternativ wäre aber ebenso denkbar, dass der Boden der Portionskapsel bereits werksseitig mit einer Auslauföffnung versehen ist, welche mittels einer Dichtfolie vorzugsweise verschlossen ist. Die Dichtfolie ist dann beispielsweise mittels des Perforationsmittels perforierbar oder von Hand vom Kapselboden abziehbar. Das Filterelement ist vorzugsweise reißfest ausgebildet. Bei der Dichtfolie handelt es sich vorzugsweise um eine Kunststofffolie, die mindestens eine Barriereschicht, beispielsweise eine Metallschicht, insbesondere eine Aliminium-Schicht aufweist. Die Kunststofffolie weist vorzugsweise auf ihrer der Kapsel zugewandten Seite eine "Peel-Schicht" auf, um die Kunststofffolie vergleichsweise leicht von dem Kapselboden lösen zu können.

Die Auslauföffnung ist vorzugsweise so groß vorgesehen, dass sie ein gegebenenfalls vorhandenes Perforationsmittel berührungsfrei aufnehmen kann. Besonders bevorzugt ist die Auslauföffnung so groß vorgesehen, dass an ihr, beim Ausströmen des fertiggestellten Getränkes kein nennenswerter Druckverlust entsteht, insbesondere dass es zu keiner nennenswerten Verwirbelung des fertiggestellten Getränkes kommt, der zu einem Gaseintrag in das Getränk und damit zur Schaumbildung führen könnte.

Vorzugsweise weist die Portionskapsel einen Flüssigkeitsverteiler auf, der die einströmende Flüssigkeit umlenkt und über den Querschnitt der Portionskapsel verteilt.

Vorzugsweise ist das Filterelement elastisch ausgebildet ist und zumindest in seinem Randbereich im Bereich des Kapselbodens angeordnet und/oder befestigt ist. Wenn der Kapselboden von einem äußeren Perforationsmittel durchstochen wird, kann das Filterelement bei einem Kontakt mit dem Perforationsmittel aufgrund seiner Elastizität derart nachgeben bzw. gedehnt werden, dass eine Perforation des Filterelements zumindest vermindert wird. Somit wird die Gefahr ausgeräumt, dass das Filterelement durch das Perforationsmittel vollständig perforiert wird und Getränkesubstanz ungefiltert aus der Portionskapsel gespült wird. Eine feste Beabstandung zwischen dem Filterelement und dem Kapselboden, wie sie aus dem Stand der Technik bekannt ist, ist nicht notwendig, da dieser Abstand durch das Perforationsmittel automatisch herbeigeführt wird. Auf diese Weise entsteht unterhalb des Filterelements ferner ein Sammelbecken für die durch das Filterelement hindurchtretende Getränkeflüssigkeit.

Vorzugsweise wird mindestens eine Lage des Filterelements von dem Perforationsmittel gespannt, angestochen und/oder durchstochen.

Gemäß einer weiteren Ausführungsform der vorliegenden Erfindung ist vorgesehen, dass das Filterelement den Kapselboden vollständig oder nur teilweise überdeckt. Insbesondere ist es ausreichend, wenn das Filterelement ausschließlich im Bereich der Perforierung bzw. im Bereich einer Auslassöffnung im Kapselboden angeordnet ist.

Gemäß einer weiteren Ausführungsform der vorliegenden Erfindung ist vorgesehen, dass das Filterelement am Kapselboden befestigt ist, wobei das Filterelement stoffschlüssig am Kapselboden durch Siegeln befestigt ist. Vorteilhafterweise wird somit ein Verrutschen des Filterelements verhindert. Diese Befestigung erfolgt vorzugsweise durch Ultraschallschweißen.

Gemäß einer weiteren Ausführungsform der vorliegenden Erfindung ist vorgesehen, dass das Filterelement in einem Randbereich des Kapselbodens am Kapselboden befestigt ist. Vorteilhafterweise wird somit ein Verrutschen des Filterelements verhindert und die Dichtwirkung zwischen Kapselkörper und Filterelement vergrößert, wobei aber gleichzeitig ein Anheben des Filterelements in seinem Zentralbereich weiterhin ermöglicht wird. Das Filterelement ist dabei vorzugsweise elastisch ausgebildet.

Gemäß einer weiteren Ausführungsform der vorliegenden Erfindung ist vorgesehen, dass der Kapselboden eine Ausbuchtung in eine der Einfüllseite entgegengesetzte Richtung aufweist. Vorteilhafterweise dient die Ausbuchtung zur Aufnahme des Perforierungsmittels, so dass beim Einstechen des Perforierungsmittels in den Kapselboden der Kapselboden im Bereich der Ausbuchtung zwar perforiert wird, das Perforierungsmittel aber anschließend im Hohlraum der Ausbuchtung verbleibt. Vorzugsweise wird dabei zumindest eine Lage des Filterelements an- und/oder durchstochen. Vorzugsweise nimmt die Ausbuchtung das Filzelement zumindest teilweise auf.

Gemäß einer weiteren Ausführungsform der vorliegenden Erfindung ist vorgesehen, dass das Filterelement sich nur in einem Zentralbereich vom Kapselboden abhebt und im Randbereich des Kapselbodens weiter am Kapselboden befestigt ist. Vorteilhafterweise wird somit ein Verrutschen des Filterelements verhindert und die Dichtwirkung zwischen Kapselkörper und Filterelement vergrößert, wobei aber gleichzeitig ein Anheben des Filterelements in seinem Zentralbereich weiterhin ermöglicht wird. Das Filterelement ist dabei vorzugsweise elastisch ausgebildet.

Gemäß einer weiteren Ausführungsform weist der Kapselboden permanent eine Ausgangsöffnung auf, welche vorzugsweise mit einer Folie abgedichtet ist, wobei die Folie besonders bevorzugt eine Abziehlasche zum Abziehen der Folie von Hand aufweist. Eine Perforation des Kapselbodens mittels eines äußeren Perforationsmittel ist hierbei vorteilhafterweise nicht erforderlich. Vor dem Einlegen der Portionskapsel in die Brühkammer wird die Folie mittels der Abziehlasche einfach vom Kapselboden abgezogen und der Brühvorgang kann gestartet werden. Die Kombination einer vorgefertigten und somit vergleichsweise großen Ausgangsöffnung mit einem Filterelement aus einer oder mehreren Vlieslagen und/oder einer Lage mit einer Filzstruktur, insbesondere Nadelfilz hat den Vorteil, dass die Getränkeflüssigkeit nicht unter hohem Druck aus der Ausgangsöffnung herausfließt und somit die Schaumbildung ("Crema"), insbesondere bei der Herstellung von amerikanischem Kaffee oder Tee, verhindert wird.

Vorzugsweise erfolgt die Verbindung des Filterelements mit dem Boden und die Verbindung zwischen den Lagen durch Schweißen, insbesondere Ultraschall-schweißen. Während der Verbindung der unteren, den Boden berührenden Lage mit dem Boden wird im Wesentlichen gleichzeitig auch ein Verbund der beiden Lagen untereinander erzeugt, vorzugsweise mit derselben Sonotrode.

Ein weiterer Gegenstand der vorliegenden Erfindung ist ein Verfahren zur Herstellung eines Getränks mit der erfindungsgemäßen Portionskapsel, bei dem in einem ersten Verfahrensschritt die Portionskapsel bereitgestellt wird, in einem zweiten Verfahrensschritt der Kapselboden mittels eines äußeren Perforationsmittels perforiert wird, und in einem dritten Verfahrensschritt zumindest eine Lage des Filterelements zumindest teilweise vom Kapselboden beabstandet wird und/oder der Abstand zwischen den Lagen vergrößert wird.

Die zu einem Gegenstand der vorliegenden Erfindung gemachten Ausführungen gelten für die anderen Gegenstände gleichermaßen und umgekehrt.

Gemäß einer weiteren Ausführungsform der vorliegenden Erfindung ist vorgesehen, dass das Filterelement bei der Beabstandung des Zentralbereichs vom Kapselboden zumindest teilweise gedehnt wird. Auf diese Weise wird eine stoffschlüssige Befestigung des Randbereichs des Filterelements am Kapselboden ermöglicht, wobei sich trotzdem das Filterelement im Zentralbereich vom Kapselboden abheben kann. Hierdurch werden die Vorteile einer maximalen Dichtwirkung mit den Vorteilen des sich anhebenden Filterelements verknüpft. Alternativ oder zusätzlich wird der Abstand der beiden Lagen lokal, insbesondere im Zentralbereich vergrößert

Ein weiterer Gegenstand der vorliegenden Erfindung ist die Verwendung einer Portionskapsel zur Herstellung eines Getränks, vorzugsweise zur Herstellung eines Kaffee-, Kakao-, Tee- und/oder Milchgetränks.

Die zu einem Gegenstand der vorliegenden Erfindung gemachten Ausführungen gelten für die anderen Gegenstände gleichermaßen und umgekehrt.

Ausführungsbeispiele der Erfindung sind in den Figuren dargestellt und in der nachfolgenden Beschreibung näher erläutert. Die Figuren sind lediglich beispielhaft beschrieben und schränken den allgemeinen Erfindungsgedanken nicht ein. Die Beschreibung gilt für alle Gegenstände der vorliegenden Erfindung gleichermaßen.
- **Figur 1**: zeigt einen Längsschnitt durch eine Portionskapsel gemäß einer ersten Ausführungsform der vorliegenden Erfindung, die für die Zubereitung von Espresso eingerichtet ist.
- **Figur 2**: zeigt einen Längsschnitt durch eine in einer geschlossenen Brühkammer liegende Portionskapsel gemäß der ersten Ausführungsform der vorliegenden Erfindung
- **Figur 3**: zeigt einen Längsschnitt durch eine in einer geschlossenen Brühkammer liegende Portionskapsel gemäß einer zweiten Ausführungsform der vorliegenden Erfindung.
- **Figuren 4**: zeigt eine erste Ausführungsform des Filterelements.
- **Figuren 5**: zeigen schematisch die Herstellung der Portionskapsel
- **Figuren 6**: zeigen schematische das Anstechen einer Portionskapsel.
- **Figuren 7**: zeigen eine Portionskapsel mit einer verschlossenen Bodenöffnung.
- **Figuren 8**: zeigt eine weitere Ausführungsform des Filters.
- **Figur 9**: zeigt die Perforation des Filters gemäß Figur 8.

In den verschiedenen Figuren sind gleiche Teile stets mit den gleichen Bezugszeichen versehen und werden daher in der Regel auch jeweils nur einmal benannt bzw. erwähnt.

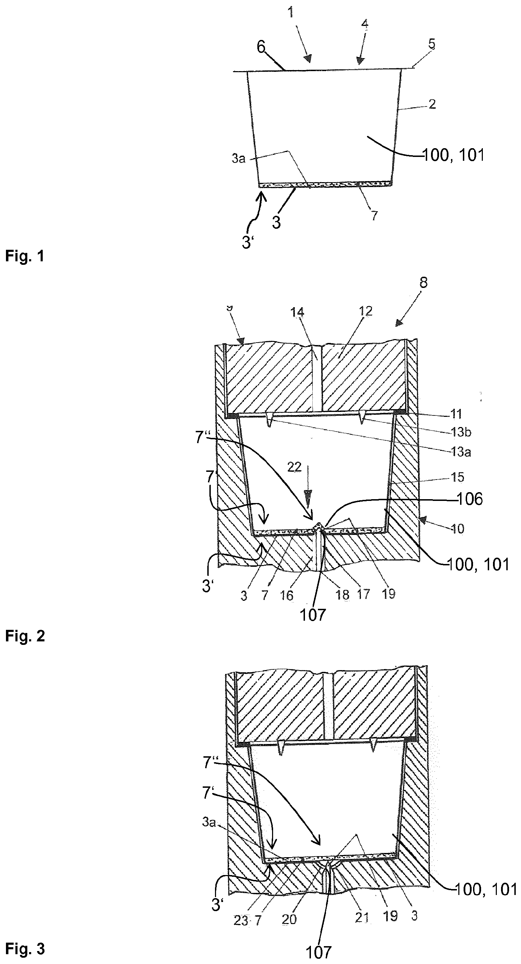

In **Figur 1** ist eine erste Ausführungsform der erfindungsgemäßen Portionskapsel 1 dargestellt. Die Portionskapsel 1 umfasst einen kegelstumpfförmigen Kapselkörper 2 mit einem geschlossenen Kapselboden 3 und mit einem an seiner Einfüllseite 4 angeordneten Kragenrand 5, auf den eine Deckelfolie 6 aufgeschweißt oder geklebt ist. Zwischen dem Kapselboden 3 und der Deckelfolie 6 ist somit ein, vorzugsweise luft- und aromadicht verschlossener Hohlraum 100, ausgebildet, welcher mit einer pulver- und granulatförmigen Getränkesubstanz 101 gefüllt ist. Die Getränkesubstanz 101 umfasst dabei beispielsweise ein Kaffee-, Kakao-, Tee- und/oder Milchpulver (bzw. -granulat). Auf der Innenseite 3a des geschlossenen Kapselkörperbodens 3, d.h. innerhalb des Hohlraums 100, ist ein Filterelement 7angeordnet, das näher anhand der nachfolgenden Figuren erläutert wird. Das Filterelement 7 liegt auf der Innenseite 3a des Kapselbodens 3 auf und ist fest, d.h. stoffschlüssig, mit der Innenseite 3a des Kapselkörperbodens 3 verbunden. Das Filterelement 7 nur in einem Randbereich 3' des Kapselbodens 3 am Kapselboden 3 stoffschlüssig entlang eines Kreisrings befestigt. Das Filterelement umfasst mindestens eine Lage aus Vliesstoff, insbesondere ein aus Polyester-Feinfasern hergestellten Vliesstoff. Die Fasern werden besonders bevorzugt mittels eines Kalanders thermisch miteinander verbunden, beispielsweise werden eine Vielzahl von extrudierten Polyesterfasern aufeinander und nebeneinander angeordnet und anschließend mittels beheizten Walzen verfestigt (flach kalandriert). Der Vliesstoff umfasst einen Wirrfaser- und/oder faserorientierten-Vliesstoff.

In **Figur 2** ist eine Portionskapsel 1 gemäß der in Figur 1 illustrierten ersten Ausführungsform der vorliegenden Erfindung dargestellt, wobei die Portionskapsel 1 in der Figur 2 in einer geschlossenen Brühkammer 8 angeordnet ist. Die Brühkammer 8 besteht aus einem ersten Brühkammerelement 9 und einem zweiten Brühkammerelement 10, wobei das erste Brühkammerelement 9 zur Einführung der Portionskapsel 1 beweglich gegenüber dem zweiten Brühkammerelement 10 oder umgekehrt vorgesehen ist. Zwischen den beiden Brühkammerelementen 9, 10 ist eine Dichtung 11 angeordnet. Das erste Brühkammerelement 9 besteht im Wesentlichen aus einem Schließkolben 12 mit Einstechelementen 13a, 13b zur Öffnung der Deckelfolie 6 der Portionskapsel 1, einer Zubereitungsflüssigkeitszuführung 14 und der Dichtung 11. Das zweite Brühkammerelement 10 besteht im Wesentlichen aus einer die Portionskapsel 1 teilweise umschließenden Brühkammerglocke 15 mit einem am Boden der Brühkammerglocke 15 angeordneten Öffnungsdorn 16, der mit Ablaufrillen 17 versehen ist, und einem Getränkeablauf 18. Zur Aufnahme der Portionskapsel 1 befindet sich die Brühkammer 8 in einem nicht dargestellten geöffneten Zustand, in welchem das erste und das zweite Brühkammerelement 9, 10 voneinander beabstandet sind, um eine Zuführung der Portionskapsel 1 zu gewährleisten, und dem dargestellten geschlossenen Zustand, in welchem ein Zubereitungsvorgang zur Herstellung eines Getränks mittels der Portionskapsel 1 durchführbar ist. Im geschlossenen Zustand ist die Brühkammer 8 druckdicht verschlossen. Beim Überführen der Brühkammer 8 vom geöffneten Zustand in den abgebildeten geschlossenen Zustand wird die Deckelfolie 6 von den Einstechelementen 13a, 13b durchstochen, so dass Zubereitungsflüssigkeit, insbesondere heißes Brühwasser, durch die Zubereitungsflüssigkeitszuführung 14 unter Druck in den Hohlraum 100 der Portionskapsel 1 gelangt. Ferner wird beim Schließen der Brühkammer 8 der Kapselboden 3 von dem als Öffnungsdorn 16 ausgebildeten Perforationsmittel perforiert, so dass eine Ausgangsöffnung 107 in der Portionskapsel 1 erzeugt wird, durch welche die hergestellte Getränkeflüssigkeit aus der Portionskapsel 1 in Richtung des Getränkeablaufs 18 heraustreten kann. Zur Unterstützung der Ableitung der Getränkeflüssigkeit weist der Öffnungsdorn 16 auf seiner Mantelfläche vorzugsweise die Ablaufrillen 17 auf. In der Darstellung ist der Boden 3 der in der Brühkammer 9, 10 befindlichen Portionskapsel 1 von dem Öffnungsdorn 16 des zweiten Brühkammelementes durchstochen, aber das über der Einstichstelle liegende Filterelement 7 ist von der Einstechspitze 19 des Öffnungsdornes 16 leicht angehoben, jedoch nicht durchstochen. Dies wird insbesondere dadurch erreicht, dass der Zentralbereich 7" nicht stoffschlüssig mit dem Kapselboden 3 verbunden ist, sondern das Filterelement 7 lediglich im Randbereich 3' des Kapselbodens 3 stoffschlüssig mit dem Kapselboden 3 verbunden ist, so dass es in Folge des mechanischen Kontaktes mit der Spitze des Öffnungsdorns 16 lediglich vom Kapselboden 3 angehoben wird und somit unperforiert bleibt (d.h. nicht vom Öffnungsdorn 16 perforiert wird). Im Randbereich 3' des Kapselbodens 3 bzw. im Randbereich 7' des Filterelements 7 bleiben der Kapselboden 3 und das Filterelement 7 miteinander in Kontakt und insbesondere stoffschlüssig miteinander verbunden, so dass keine Getränkesubstanz 101 um das Filterelement 7 herum in den Getränkeablauf 18 gelangt. Es ist aber auch möglich, dass der Öffnungsdorn 16 mindestens eine Lage des Filterelements 7 an- und/oder durchsticht.

In **Figur 3** ist eine Portionskapsel 1 gemäß einer zweiten Ausführungsform der vorliegenden Erfindung dargestellt, wobei die zweite Ausführungsform im Wesentlichen der in Figur 2 illustrierten ersten Ausführungsform gleicht und die Portionskapsel 1 ebenfalls in einer geschlossenen Brühkammer 8 dargestellt ist. Im Unterschied zur ersten Ausführungsform weist der Portionskapselboden 3 im Einstechbereich des Öffnungsdornes 16 jedoch eine gegen eine Einbuchtung 20 im Brühkammerboden 3a gerichtete Ausbuchtung 21 auf (die Ausbuchtung 21 ist somit in eine der Einfüllseite 4 entgegengesetzte Richtung gerichtet), in die der Öffnungsdorn 16 einsticht, ohne dabei das Filterelement 7 zu durchstechen. Ein Abheben des Filterelements 7 vom Kapselboden 3 ist somit insbesondere nicht erforderlich. Zur Herstellung des Getränkes wird wiederum nach dem Einbringen der Portionskapsel 1 in die Brühkammer 8, die Brühkammer 8 geschlossen. Während des Schließvorganges wird die Deckelfolie 6 der Portionskapsel 1 mittels der Einstechmittel 13a, 13b perforiert und nach erfolgtem Zusammenführen und Abdichten des ersten und des zweiten Brühkammerelementes 9, 10 (mittels der Dichtung 11) wird Brühwasser über den Flüssigkeitseinlass 6 zur Verfügung gestellt. Ebenso sticht während des Schließvorganges der Brühkammer der Öffnungsdorn 16 eine Öffnung in den Boden 3 der Portionskapsel 1. Das über der Einstichstelle liegende Filterelement 7 ist in seiner Dicke und Reißfestigkeit auf die Eindringtiefe der Einstechspitze 19 des Öffnungsdornes 16 abgestimmt, so dass das Filterelement 7 nicht durchstoßen wird. Alternativ liegt das Filterelement 7 über der Ausbuchtung 21 des Kapselbodens 3, die in der Einbuchtung des Brühglockenbodens 23 liegt, und der Öffnungsdorn 16 sticht lediglich in die Ausbuchtung 21 des Kapselbodens 3 und gelangt nicht bis zum Filterelement 7. Sodann strömt die Flüssigkeit, bei der Herstellung von Kaffee beispielsweise heißes Wasser, in die Kapsel 1 ein. In der Kapsel durchströmt diese Flüssigkeit das Getränkesubstrat 101 und extrahiert und/oder löst die für die Getränkeherstellung benötigten Substanzen aus dem Getränkesubstrat 101 aus. Die Strömung der Flüssigkeit in dem Getränkesubstrat 101 ist durch das Bezugszeichen 22 illustriert. Danach strömt das resultierende Getränk durch das zwischen dem Getränkesubstrat 101 und das auf dem Kapselboden 3 angeordnete Filterelement 7, welches verhindert, dass Bestandteile des Getränkesubstrates 101 partikelförmig in das resultierende Getränk gelangen und über die von dem Öffnungsdorn 16 in den Kapselboden 3 gestochene Öffnung und über die Ablaufrillen 17 des Öffnungsdornes 16 weiter in ein Auffanggefäß, beispielsweise eine Tasse oder Kanne, gelangen.

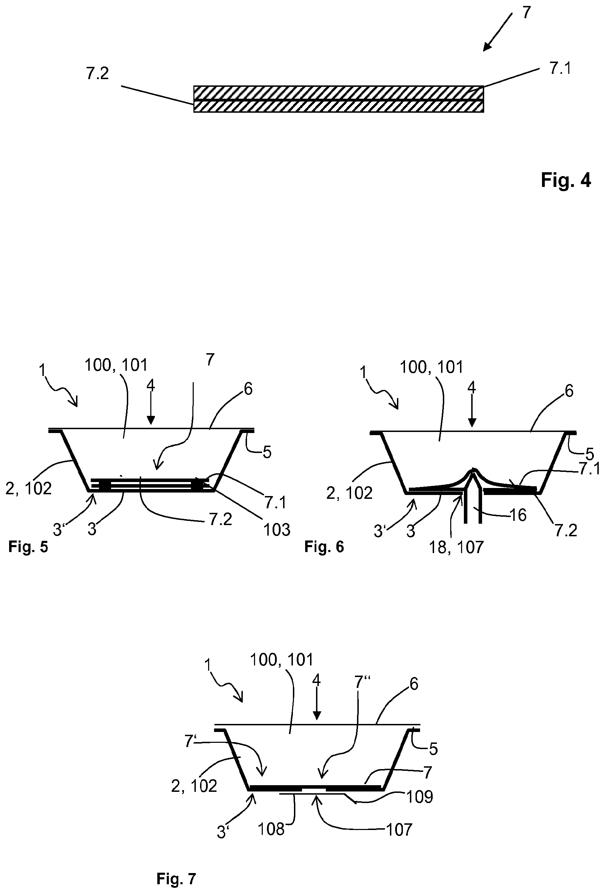

Figur 4 zeigt eine erste Ausführungsform des Filterelements 7. Dieses weist erfindungsgemäß eine erste Lage 7.1 und eine zweite Lage 7.2 auf, die in dem vorliegenden Fall jeweils aus einem Vlies, d.h. einem nicht gewebten Material gefertigt sind. Beide Lagen 7.1, 7.2 sind hier stoffschlüssig, insbesondere durch Schweißen, vorzugsweise durch Ultraschall-Schweißen miteinander verbunden. Beide Lagen sind hier als Kreisscheiben vorgesehen. Die Verbindung erfolgt vorzugsweise entlang eines Kreisrings, der sich besonders bevorzugt konzentrisch um die Rotationsachse der Portionskapsel erstreckt. Die beiden Lagen sind vorzugsweise identisch vorgesehen, können sich aber auch hinsichtlich dem Material, der Dicke und oder dem Durchmesser unterscheiden.

Wie insbesondere Figur 5 entnommen werden kann, werden die beiden Lagen zunächst vorzugsweise als separate Teile in die Portionskapsel eingelegt und dann wird die untere Lage 7.2 mit dem Boden 3 der Portionskapsel verbunden Filterelement 7 am Boden 3 der Portionskapsel durch Schweißen, insbesondere Ultraschall-Schweißen verbunden. Gleichzeitig werden die beiden Lagen 7.1 und 7.2 dabei miteinander verbunden. Die Verbindung sowohl zwischen dem Filterelement 7 und dem Kapselboden 3 als auch zwischen den beiden Lagen 7.1, 7.2 des Filterelements untereinander erfolgt entlang eines Kreisrings. Eine Sonotrode drückt die beiden Lagen vorzugsweise zusammen und dabei gegen den Boden der Portionskapsel. Dabei erfolgt die Verschweißung der beiden Lagen untereinander und die Verbindung der unteren Lage mit dem Boden der Portionskapsel zumindest im Wesentlichen gleichzeitig.

Figur 6 zeigt das Anstechen der Portionskapsel mittels eines Öffnungsdorns 16, der zunächst den Kapselboden 3 durchsticht und dadurch einen Ablauf für das herzustellende Getränk zur Verfügung stellt. Wie der Darstellung gemäß Figur 6 entnommen werden kann, durchsticht der Öffnungsdorn vorzugsweise zumindest die untere Lage des Filterelements und sticht die obere Lage 7.2 zumindest an. Insbesondere wird der Abstand zwischen den beiden Lagen lokal, hier im Zentralbereich des Filterelements, vergrößert.

Figur 7 zeigt eine weitere Ausführungsform der erfindungsgemäßen Portionskapsel. In dem vorliegenden Fall ist in dem Kapselboden eine permanente Öffnung vorgesehen, die hier durch eine Abziehlasche 109 verschlossen ist. Diese Abziehlasche kann von dem Öffnungsdorn durchstochen oder vor der Herstellung des Getränks manuell, beispielsweise durch Abziehen, entfernt werden.

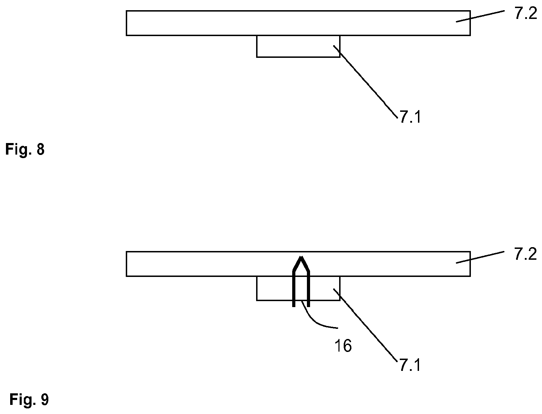

Figur 8 zeigt eine weitere Ausführungsform des Filters 7, der wiederum zweilagig vorgesehen ist, wobei das Filterelement in dem vorliegenden Fall eine erste Lage 7.2, bestehend aus einem Vliesstoff, und eine zweite Lage 7.1, bestehend aus einem gefilzten Material, aufweist. Die beiden Lagen sind vorzugsweise stoffschlüssig miteinander verbunden und ganz besonders bevorzugt ist die angeströmte Fläche oder der Durchmesser der Lage 7.1 kleiner im Vergleich zu der Lage 7.2. Die Dicke beider Lagen kann gleich oder unterschiedlich sein. Figur 9 zeigt schematisch das Anstechen einer Portionskapsel, in der sich das Filterelement 7 befindet. Es ist deutlich zu erkennen, dass die Lage 7.1 durch- und die Lage 7.2 nur angestochen wird. Dadurch ist sichergestellt, dass kein Granulat beispielsweise in ein herzustellendes Getränk gelangt.

### Bezugszeichenliste

- 1: Portionskapsel
- 2: Kapselkörper
- 3: Kapselboden
- 3a: Kapselboden-Innenseite
- 3': Randbereich des Kapselbodens
- 4: Einfüllseite
- 5: Kragenrand
- 6: Deckelfolie
- 7: Filterelement
- 7': Randbereich des Filterelements
- 7": Zentralbereich des Filterelements
- 7.1: Filzstruktur, Nadelfilzstruktur
- 7.2: Trägerstruktur
- 7.3: Filzstruktur, Nadelfilzstruktur
- 8: Brühkammer
- 9: Erstes Brühkammerelement
- 10: Zweites Brühkammerelement
- 11: Dichtung
- 12: Schließkolben
- 13a: Einstechelement
- 13b: Einstechelement
- 14: Zubereitungsflüssigkeitszufuhr
- 15: Brühglocke
- 16: Öffnungsdorn
- 17: Auslaufrillen
- 18: Ablauf
- 19: Einstechspitze
- 20: Einbuchtung
- 21: Ausbuchtung
- 22: Zubereitungsflüssigkeitsfluss
- 23: Brühglockenboden
- 100: Hohlraum
- 101: Getränkesubstrat
- 102: Seitenwandbereich
- 103: Befestigung des Filters 7, Scheißung
- 103': Gewellter oder gefalteter Bereich
- 104: Sollbruchstelle
- 105: Schwächungslinien
- 106: Zentraler Punkt
- 107: Ausgangsöffnung
- 108: Folie
- 109: Abziehlasche

## Patentansprüche

1. Portionskapsel (1) zur Herstellung eines Getränks aufweisend einen Kapselkörper (2) mit einem Kapselboden (3) und einer Einfüllseite (4), wobei zwischen dem Kapselboden (3) und der Einfüllseite (4) ein Hohlraum (100) zur Aufnahme eines pulverförmigen oder flüssigen Getränkesubstrats (101) ausgebildet ist und wobei zwischen dem Getränkesubstrat (101) und dem Kapselboden (3) ein Filterelement (7) angeordnet ist, das als Filtersieb Verwendung findet, wobei das Filterelement (7) aus einem nicht gewebtem Material vorgesehen ist, welches im Bereich des Kapselbodens (3) angeordnet und an den Kapselboden gesiegelt ist, wobei das Filterelement aus zwei Lagen (7.1, 7.2) und davon mindestens eine Lage aus Vlies vorgesehen ist, **dadurch gekennzeichnet, dass** die beiden Lagen (7.1, 7.2) durch eine Siegelung miteinander verbunden sind und die Siegelung lokal als Kreisring vorgesehen ist.

2. Portionskapsel (1) nach Anspruch 1, **dadurch gekennzeichnet, dass** beide Lagen (7.1, 7.2) aus einem Vlies vorgesehen sind.

3. Portionskapsel (1) nach Anspruch 1, **dadurch gekennzeichnet, dass** das Filterelement (7) aus einer Vlies- (7.1) und einer Filzlage (7.2) vorgesehen ist.

4. Portionskapsel (1) nach Anspruch 3, **dadurch gekennzeichnet, dass** die Filzlage (7.2) eine geringere angeströmte Fläche aufweist als die Vlieslage (7.1).

5. Portionskapsel (1) nach einem der Ansprüche 1 - 4, **dadurch gekennzeichnet, dass** das Vlies einen aus Polyester-Feinfasern hergestellten Vliesstoff umfasst und/oder dass das Vlies eine Massenbelegung zwischen 50 und 150 Gramm pro Quadratmeter, bevorzugt zwischen 80 und 120 Gramm pro Quadratmeter und besonders bevorzugt 100 Gramm pro Quadratmeter aufweist und/oder dass das Vlies eine Dicke zwischen 0,2 und 0,8 Millimetern, bevorzugt zwischen 0,25 und 0,39 Millimetern und besonders bevorzugt von im Wesentlichen 0,32 Millimetern aufweist und/oder dass das Vlies eine Luftdurchlässigkeit bei einem Druck von 100 Pascal zwischen 1000 und 3000 I/(m 2 s), bevorzugt zwischen 1500 und 2500 (I/m 2 s) und besonders bevorzugt im Wesentlichen bei 2000 I/(m 2 s) aufweist.

6. Portionskapsel (1) nach einem der vorhergehenden Ansprüche, **dadurch gekennzeichnet, dass** das Filterelement (7) an den Boden der Kapsel ultraschallgesiegelt und vorzugsweise gespannt ist.

7. Portionskapsel (1) nach einem der vorhergehenden Ansprüche, **dadurch gekennzeichnet, dass** das Filterelement (7) den Kapselboden (3) vollständig oder nur teilweise überdeckt.

8. Portionskapsel (1) nach einem der vorhergehenden Ansprüche, **dadurch gekennzeichnet, dass** der Kapselboden (3) eine Ausbuchtung (21) in eine der Einfüllseite (4) entgegengesetzte Richtung (103) aufweist.

9. Portionskapsel (1) nach einem der vorhergehenden Ansprüche, **dadurch gekennzeichnet, dass** das Filterelement (7) derart ausgebildet ist, dass bei einer Perforation des Kapselbodens (3) durch ein äußeres Perforationsmittel (16) zumindest teilweise ein Abheben des Filterelements (7) vom Kapselboden (3) erfolgt und/oder dass das Perforationsmittel zumindest eine Lage (7.1, 7.2) des Filters (7) perforiert.

10. Portionskapsel (1) nach Anspruch 9, **dadurch gekennzeichnet, dass** das Filterelement (7) sich nur in einem Zentralbereich (7") vom Kapselboden (3) abhebt und im Randbereich (3') des Kapselbodens (3) weiter auf dem Kapselboden (3) aufliegt oder am Kapselboden (3) befestigt ist.

11. Portionskapsel (1) nach Anspruch 9 oder 10, **dadurch gekennzeichnet, dass** das Perforationsmittel beide Lagen (7.1, 7.2) durch- und/oder ansticht.

12. Portionskapsel (1) nach einem der voranstehenden Ansprüche, **dadurch gekennzeichnet, dass** das Filterelement (7) derart ausgebildet ist, dass bei einer Perforation des Kapselbodens (3) durch ein äußeres Perforationsmittel (16) das Filterelement (7) sich in seinem Zentralbereich (7") vom Kapselboden (3) abhebt und/oder sich der Abstand zwischen den Lagen (7.1., 7.2) verändert.

13. Portionskapsel (1) nach einem der vorhergehenden Ansprüche, **dadurch gekennzeichnet, dass** der Kapselboden (3) eine Ausgangsöffnung (107) aufweist, welche vorzugsweise mit einer Folie (108) abgedichtet ist, wobei die Folie (108) besonders bevorzugt eine Abziehlasche (109) zum Abziehen der Folie von Hand aufweist.

14. Verfahren zur Herstellung eines Getränks mit einer Portionskapsel (1) nach einem der Ansprüche 1-13, **dadurch gekennzeichnet, dass** in einem ersten Verfahrensschritt die Portionskapsel (1) bereitgestellt wird, dass in einem zweiten Verfahrensschritt der Kapselboden (3) mittels eines äußeren Perforationsmittels (16) perforiert wird, und dass in einem dritten Verfahrensschritt der Abstand zwischen den Lagen (7.1, 7.2) lokal vergrößert wird.

## Claims

1. Portion capsule (1) for producing a beverage, having a capsule body (2) with a capsule base (3) and a filling side (4), with a cavity (100) for accommodating a pulverulent or liquid beverage base (101) being formed between the capsule base (3) and the filling side (4), and with a filter element (7) being arranged between the beverage base (101) and the capsule base (3), with the filter element (7) being provided from a non-woven material which is arranged in the region of the capsule base (3), wherein the filter element is provided from two layers (7.1, 7.2), **characterized in that** the two layers (7.1, 7.2) are connected to one another by a sealing effect and the sealing effect is provided locally as a circular ring.

2. Portion capsule (1) according to Claim 1, **characterized in that** at least one layer (7.1), preferably both layers (7.1, 7.2), is/are provided from a non-woven.

3. Portion capsule (1) according to Claim 1, **characterized in that** the filter element (7) is provided from a non-woven layer (7.1) and a filter layer (7.2).

4. Portion capsule (1) according to Claim 3, **characterized in that** the felt layer (7.2) has a smaller surface against which beverage flows than the non-woven layer (7.1).

5. Portion capsule (1) according to one of Claims 1-4, **characterized in that** the non-woven comprises a non-woven material which is produced from fine polyester fibers, and/or **in that** the non-woven has a mass per unit area of between 50 and 150 grams per square meter, preferably of between 80 and 120 grams per square meter and particularly preferably 100 grams per square meter, and/or **in that** the non-woven has a thickness of between 0.2 and 0.8 millimeters, preferably of between 0.25 and 0.39 millimeters and particularly preferably of substantially 0.32 millimeters, and/or **in that** the non-woven has an air permeability of between 1000 and 3000 l/(m²s), preferably of between 1500 and 2500 (l/m²s) and particularly preferably substantially of 2000 l/(m²s) at a pressure of 100 pascal.

6. Portion capsule (1) according to one of the preceding claims, **characterized in that** the filter element (7) is sealed, in particular ultrasonically sealed and preferably stretched, at the base of the capsule.

7. Portion capsule (1) according to one of the preceding claims, **characterized in that** the filter element (7) completely or only partially covers the capsule base (3).

8. Portion capsule (1) according to one of the preceding claims, **characterized in that** the capsule base (3) has a protrusion (21) in a direction (103) opposing the filling side (4).

9. Portion capsule (1) according to one of the preceding claims, **characterized in that** the filter element (7) is formed in such a way that, when the capsule base (3) is perforated by an external perforation means (16), the filter element (7) is at least partially lifted off from the capsule base (3), and/or **in that** the perforation means perforates at least one layer (7.1, 7.2) of the filter (7).

10. Portion capsule (1) according to Claim 9, **characterized in that** the filter element (7) lifts off from the capsule base (3) only in a central region (7") and continues to rest on the capsule base (3) or remains attached to the capsule base (3) in the edge region (3') of the capsule base (3).

11. Portion capsule (1) according to Claim 9 or 10, **characterized in that** the perforation means pierces and/or taps both layers (7.1, 7.2).

12. Portion capsule (1) according to one of the preceding claims, **characterized in that** the filter element (7) is formed in such a way that, when the capsule base (3) is perforated by an external perforation means (16), the filter element (7) lifts off from the capsule base (3) in the central region (7") of said filter element and/or the distance between the layers (7.1, 7.2) changes.

13. Portion capsule (1) according to one of the preceding claims, **characterized in that** the capsule base (3) has an outlet opening (107) which is preferably sealed off by a film or foil (108), with the film or foil (108) particularly preferably having a pull-off tab (109) for pulling off the film or foil by hand.

14. Method for producing a beverage using a portion capsule (1) according to one of Claims 1-13, **characterized in that** the portion capsule (1) is provided in a first method step, **in that** the capsule base (3) is perforated by means of an external perforation means (16) in a second method step, and **in that**, in a third method step, the distance between the layers (7.1, 7.2) is locally increased.

## Revendications

1. Dosette sous forme de capsule (1) pour préparer une boisson comportant un corps de dosette (2) doté d'un fond de dosette (3) et d'un côté de remplissage (4), un espace creux (100) servant à recevoir un substrat de boisson (101) sous forme de liquide ou de poudre entre le fond de dosette (3) et le côté de remplissage (4) et un élément de filtre (7) étant disposé entre le substrat de boisson (101) et le fond de dosette (3), l'élément de filtre (7) étant constitué d'un matériau non tissé disposé dans la zone du fond de dosette (3), l'élément de filtre étant constitué de deux couches (7.1, 7.2), **caractérisée en ce que** les deux couches (7.1, 7.2) sont connectées l'une à l'autre par un scellement et le scellement est réalisé localement sous forme de bague circulaire.

2. Dosette sous forme de capsule (1) selon la revendication 1, **caractérisée en ce que** au moins une couche (7.1), de préférence les deux couches (7.1, 7.2), sont constituées d'un non-tissé.

3. Dosette sous forme de capsule (1) selon la revendication 1, **caractérisée en ce que** l'élément de filtre (7) se compose d'une couche de non-tissé (7.1) et d'une couche de feutre (7.2).

4. Dosette sous forme de capsule (1) selon la revendication 3, **caractérisée en ce que** la couche de feutre (7.2) présente une plus faible surface exposée au flux que la couche de non-tissé (7.1).

5. Dosette sous forme de capsule (1) selon l'une quelconque des revendications 1-4, **caractérisée en ce que** le non-tissé comprend une matière de non-tissé fabriquée à partir de fines fibres de polyester et/ou que le non-tissé présente un taux massique d'occupation compris entre 50 et 150 grammes par mètre carré, de façon préférée entre 80 et 120 grammes par mètre carré et de façon particulièrement préférée de 100 grammes par mètre carré, et/ou que le non-tissé présente une épaisseur comprise entre 0,2 et 0,8 millimètre, de façon préférée entre 0,25 et 0,39 millimètre et de façon particulièrement préférée pour l'essentiel de 0,32 millimètre, et/ou que le non-tissé présente une perméabilité à l'air à une pression de 100 pascals comprise entre 1000 et 3000 l/(m²s), de façon préférée entre 1500 et 2500 l/(m²s) et de façon particulièrement préférée pour l'essentiel de 2000 l/(m²s).

6. Dosette sous forme de capsule (1) selon l'une quelconque des revendications précédentes, **caractérisée en ce que** l'élément de filtre (7) est scellé au niveau du fond de la dosette, notamment scellé aux ultrasons et de préférence tendu.

7. Dosette sous forme de capsule (1) selon l'une quelconque des revendications précédentes, **caractérisée en ce que** l'élément de filtre (7) recouvre entièrement ou seulement en partie le fond de dosette (3).

8. Dosette sous forme de capsule (1) selon l'une quelconque des revendications précédentes, **caractérisée en ce que** le fond de dosette (3) comporte un bombement (21) dans une direction (103) opposée au côté de remplissage (4).

9. Dosette sous forme de capsule (1) selon l'une quelconque des revendications précédentes, **caractérisée en ce que** l'élément de filtre (7) est réalisé de telle sorte qu'en cas de perforation du fond de dosette (3) par un moyen de perforation extérieur (16), un soulèvement de l'élément de filtre (7) par rapport au fond de dosette (3) se produit au moins en partie et/ou que le moyen de perforation perfore au moins une couche (7.1, 7.2) du filtre (7).

10. Dosette sous forme de capsule (1) selon la revendication 9, **caractérisée en ce que** l'élément de filtre (7) se soulève seulement du fond de dosette (3) dans une zone centrale (7") et continue de reposer sur le fond de dosette (3) dans la zone de bordure (3') du fond de dosette (3) ou est fixé au fond de dosette (3).

11. Dosette sous forme de capsule (1) selon la revendication 9 ou 10, **caractérisée en ce que** le moyen de perforation transperce et/ou perce les deux couches (7.1, 7.2).

12. Dosette sous forme de capsule (1) selon l'une quelconque des revendications précédentes, **caractérisée en ce que** l'élément de filtre (7) est réalisé de telle sorte qu'en cas de perforation du fond de dosette (3) par un moyen de perforation extérieur (16), l'élément de filtre (7) se soulève du fond de capsule (3) dans sa région centrale (7") et/ou la distance entre les couches (7.1, 7.2) soit modifiée.

13. Dosette sous forme de capsule (1) selon l'une quelconque des revendications précédentes, **caractérisée en ce que** le fond de dosette (3) présente une ouverture de sortie (107) de préférence étanchéifiée au moyen d'un film (108), le film (108) comportant de façon particulièrement préférée une languette de retrait (109) permettant de retirer le film à la main.

14. Procédé de fabrication d'une boisson à l'aide d'une dosette sous forme de capsule (1) selon l'une quelconque des revendications 1-13, **caractérisé en ce que** la dosette sous forme de capsule (1) est amenée lors d'une première étape de procédé, que le fond de dosette (3) est perforé à l'aide d'un moyen de perforation extérieur (16) lors d'une deuxième étape de procédé et que la distance entre les couches (7.1, 7.2) est augmentée localement lors d'une troisième étape de procédé.
